# EUROPÄISCHE PATENTANMELDUNG

(11) **EP 4 647 183 A1**
(43) Veröffentlichungstag der Anmeldung: **12.11.2025**
(21) Anmeldenummer: 25171324.4
(22) Anmeldetag: 17.04.2025
(51) Int. Cl.: B08B 3/14, B08B 9/30, B67C 7/00, C02F 1/00, B01D 65/02

(54) **VORRICHTUNG UND VERFAHREN ZUR REINIGUNG VON BEHÄLTERN MITTELS EINES WASSER-RINSERS**

(30) Priorität: 06.05.2024 DE 102024001470
(71) Anmelder: H. F. Meyer Maschinenbau GmbH & Co. KG, 23730 Neustadt in Holstein (DE)
(72) Erfinder: Hamann, Matthias, 23744 Schönwalde am Bungsberg (DE)
(74) Vertreter: Patentanwaltskanzlei Methling

(57) **Zusammenfassung**

Die Erfindung betrifft eine Vorrichtung zur Reinigung von Behältern (100), insbesondere Dosen in einer Getränkeabfüllanlage, mit einer Transporteinrichtung zum Transport der Behälter entlang einer Behandlungsstrecke (10), in welcher die Behälter (100) mit einer Öffnung nach unten weisend transportierbar sind, wobei die Behandlungsstrecke (10) zumindest eine erste Behandlungszone (11) mit einer Anordnung einer Mehrzahl von auf die Öffnung der Behälter (100) gerichteten Düsen (14) zur Einspritzung von Wasser in die Behälter (100) aufweist, wobei die Vorrichtung einen Wassersammler (15) zum Auffangen des aus den gereinigten Behältern (100) austretenden Brauchwassers aufweist und wobei die Vorrichtung zumindest einen Brauchwassertank (20) zur Aufnahme des Brauchwassers aus dem Wassersammler (15) aufweist, wobei die Vorrichtung zumindest ein Filtrationsmodul (30) aufweist welches dem Brauchwassertank (20) nachgeschaltet ist, wobei die Vorrichtung zumindest einen Reinwassertank (40) aufweist, welcher dem Filtrationsmodul (30) nachgeschaltet ist und zumindest eine Leitung (44) von dem Reinwassertank (40) zu einem die Düsen (14) der ersten Behandlungszone (11) speisenden Verteiler (13) angeordnet ist. Ferner betrifft die Erfindung ein Verfahren zur Reinigung von Behältern, insbesondere ein Verfahren zum Betrieb einer solchen Vorrichtung.

## Beschreibung

Die Erfindung betrifft eine Vorrichtung zur Reinigung von Behältern, insbesondere Dosen in einer Getränkeabfüllanlage, mit einer Transporteinrichtung zum Transport der Behälter entlang einer Behandlungsstrecke, in welcher die Behälter mit einer Öffnung nach unten weisend transportierbar sind, wobei die Behandlungsstrecke zumindest eine erste Behandlungszone mit einer Anordnung einer Mehrzahl von auf die Öffnung der Behälter gerichteten Düsen zur Einspritzung von Wasser in die Behälter aufweist.

Die Erfindung betrifft ferner ein Verfahren zur Reinigung von Behältern, insbesondere Dosen in einer Getränkeabfüllanlage, mit einer Transporteinrichtung zum Transport der Behälter entlang einer Behandlungsstrecke, in welcher die Behälter mit einer Öffnung nach unten weisend transportiert werden, wobei die Behandlungsstrecke zumindest eine erste Behandlungszone mit einer Anordnung einer Mehrzahl von auf die Öffnung der Behälter gerichteten Düsen zur Einspritzung von Wasser in die Behälter aufweist.

Derartige Vorrichtungen und Verfahren sind bekannt. Solche Vorrichtungen zur Reinigung von Behältern, insbesondere Dosen in einer Getränkeabfüllanlage werden als Rinser oder Wasser-Rinser bezeichnet.

Für die Reinigung von unbefüllten Getränkedosen in Getränkeabfüllanlagen werden Wasser-Rinser eingesetzt. Die Getränkedosen können unterschiedliche Größen und Formate aufweisen. Vor dem Einlauf in die Spülstrecke des Rinsers werden die Dosen mit der Öffnung nach unten gedreht und über einem Sprührohr mit Sprühdüsen mit Wasser ausgespült. Durch die Wasserspülung werden in der Regel Kartonfasern, Staub und andere durch Umwelteinflüsse verursachte Verschmutzungen entfernt. Heutige Abfüllanlagen haben üblicherweise eine Kapazität von 90.000 - 120.000 Dosen/h. Bei diesen Geschwindigkeiten werden ca. 35 Liter Frischwasser pro Minute = ca. 50400 Liter pro Tag im 3-Schichtbetrieb/24h für die Reinigung der Dosen versprüht. Dabei wird das ablaufende Wasser als Abwasser entsorgt.

Die Aufgabe der Erfindung ist es, eine Vorrichtung und ein Verfahren zur Reinigung von Behältern anzugeben, um den Verbrauch von Frischwasser deutlich zu reduzieren.

Diese Aufgabe wird erfindungsgemäß durch die Vorrichtung gemäß Anspruch 1 und das Verfahren gemäß Anspruch 10 gelöst. Vorteilhafte Weiterbildungen der Erfindung sind in den abhängigen Ansprüchen angegeben.

Besonders vorteilhaft bei der Vorrichtung zur Reinigung von Behältern, insbesondere Dosen in einer Getränkeabfüllanlage, mit einer Transporteinrichtung zum Transport der Behälter entlang einer Behandlungsstrecke, in welcher die Behälter mit einer Öffnung nach unten weisend transportierbar sind, wobei die Behandlungsstrecke zumindest eine erste Behandlungszone mit einer Anordnung einer Mehrzahl von auf die Öffnung der Behälter gerichteten Düsen zur Einspritzung von Wasser in die Behälter aufweist, ist es, dass die Vorrichtung einen Wassersammler zum Auffangen des aus den gereinigten Behältern austretenden Brauchwassers aufweist und wobei die Vorrichtung zumindest einen Brauchwassertank zur Aufnahme des Brauchwassers aus dem Wassersammler aufweist, wobei die Vorrichtung zumindest ein Filtrationsmodul aufweist welches dem Brauchwassertank nachgeschaltet ist, wobei die Vorrichtung zumindest einen Reinwassertank aufweist, welcher dem Filtrationsmodul nachgeschaltet ist und zumindest eine Leitung von dem Reinwassertank zu einem die Düsen der ersten Behandlungszone speisenden Verteiler angeordnet ist.

Zum Auffangen des Brauchwassers ist dabei der Wassersammler unterhalb der Behandlungsstrecke angeordnet, sodass das aus den gereinigten nach unten offenen Dosen heraustretende Brauchwasser automatisch in den Wassersammler gelangt.

Im Sinne der Erfindung werden die Begriffe Dosen und Behälter synonym benutzt. Weder bei der erfindungsgemäßen Vorrichtung noch bei dem erfindungsgemäßen Verfahren ist eine Beschränkung der Anwendung auf Getränkedosen gegeben. Im Sinne der Erfindung werden ferner die Begriffe Filtrationsmodul und Filtermodul synonym benutzt.

Besonders vorteilhaft ist es dabei, dass die Vorrichtung eine Kreislaufwasserführung aufweist, mittels derer das mittels des Filtrationsmoduls aufbereitete Wasser anschließend einer Leitung zur Speisung der Düsen zumindest der ersten Behandlungszone zuführbar ist. Hierdurch ergibt sich eine erhebliche Einsparung von Frischwasser, da bis auf den mit den gereinigten Dosen verschleppten Wasseranteil das Brauchwasser vollständig im Kreislauf geführt und zur Reinigung der Dosen wiederverwendet wird.

Der Erfindung liegt somit die Idee zugrunde, das ablaufende Wasser aus dem Rinser so effektiv zu filtern, dass es im Kreislauf bleibt und mehrfach verwendet werden kann.

Vorzugsweise wird/werden als Filtrationsmodul ein oder mehrere Ultrafiltrationsmodule eingesetzt, insbesondere mit einem Filtrationsbereich von 0,01 µm bis 0,05 µm.

Zum Einsatz kommt bevorzugt ein Filtrationsmodul bestehend aus einem Bündel von Hohlfasern. Die Hohlfasern filtern das Brauchwasser aus dem Rinser im Ultrafiltrationsbereich, bevorzugt im Bereich von 0,01µm - 0,05 µm. Der große Vorteil der Ultrafiltration gegenüber herkömmlichen Filtermethoden ist die absolute Keimfreiheit des filtrierten Wassers. Die Poren der Ultrafiltrations-Membranen stellen eine zuverlässige Barriere für Bakterien und auch Viren dar. Ultrafiltrationsmodule dieser Art werden beispielsweise auch in Wasserwerken bei der Trinkwasseraufbereitung eingesetzt.

Bevorzugt ist eine einen Überlauf vom Reinwassertank zum Brauchwassertank bildende Verbindungsleitung zwischen dem Reinwassertank und dem Brauchwassertank angeordnet. Hierdurch ist es gewährleistet, dass immer ein Filtratüberlauf vom Reinwassertank (Sauber) zum Brauchwassertank (Schmutz) stattfindet. Vorzugsweise weist der Überlauf eine Rückschlagklappe und/oder ein Rückschlagventil auf. Hierdurch wird ein Fluss vom Brauchwassertank zum Reinwassertank verhindert.

Vorzugsweise weisen der Brauchwassertank und/oder der Reinwassertank jeweils zumindest einen Füllstandsensor auf. Mittels derartiger Füllstandsensoren ist eine permanente Überwachung des Füllstandes des Brauchwassertanks und/oder des Reinwassertanks möglich. Insbesondere kann der Reinwassertank einen Frischwasserzulauf aufweisen, über welchen Frischwasser in den Frischwassertank nachdosiert werden kann, sofern die vorhandene Reinwassermenge im Reinwassertank zur Versorgung der Düsen der ersten Behandlungszone nicht ausreichend sein sollte.

Der Brauchwassertank weist vorzugsweise einen Überlauf auf, über welchen überschüssiges Brauchwasser abgelassen werden kann, sofern der Füllstand im Brauchwassertank zu hoch sein sollte.

Bevorzugt ist zumindest eine Brauchwasserpumpe angeordnet, mittels derer Brauchwasser aus dem Brauchwassertank zu zumindest einem Filtrationsmodul gefördert wird, deren Förderdruck vorzugsweise so gewählt ist, dass der Druckverlust über dem Filtrationsmodul ausgeglichen wird. Insbesondere kann es sich bei der Brauchwasserpumpe um eine frequenzgeregelte Pumpe handeln.

Bevorzugt ist zumindest eine Reinwasserpumpe angeordnet, mittels derer Reinwasser aus dem Reinwassertank zu den Düsen zumindest der ersten Behandlungszone gefördert wird, deren Förderdruck vorzugsweise so gewählt ist, dass der benötigte Druck an den Düsen bereitgestellt wird. Insbesondere kann es sich bei der Reinwasserpumpe um eine frequenzgeregelte Pumpe handeln.

Vorzugsweise sind mehrere Filtrationsmodule parallelgeschaltet, sodass zumindest ein Filtrationsmodul im Filterbetrieb von Brauchwasser durchströmbar ist und zumindest ein anderes Filtrationsmodul gleichzeitig im Spülbetrieb regenerierbar ist.

Durch eine solche redundante Ausgestaltung und parallele Anordnung mehrerer Filtrationsmodule ist ein kontinuierlicher Betrieb der Vorrichtung ermöglicht, d.h. es muss bei einer erforderlichen Regeneration eines Filtrationsmoduls keine Betriebsunterbrechung erfolgen.

In einer bevorzugten Ausführungsform weist die Behandlungsstrecke in Transportrichtung auf die erste Behandlungszone folgend eine zweite Behandlungszone mit einer Anordnung einer Mehrzahl von auf die Öffnung der Behälter gerichteten Düsen zur Einspritzung von Wasser in die Behälter auf.

Bei der ersten Behandlungszone handelt es sich bei dieser Ausgestaltung um eine Vorwaschzone, wobei die zweite Behandlungszone eine Nachspülzone bildet. Im Betrieb wird dabei bevorzugt die erste Behandlungszone mit dem im Kreislauf geführten mittels des Filtrationsmoduls aufbereiteten Wasser gespeist, während die zweite Behandlungszone bevorzugt mit Frischwasser gespeist wird.

Die Sprühdüsen können dabei im Verhältnis 80/20 zwischen der ersten Behandlungszone und der zweiten Behandlungszone aufgeteilt aufgeteilt sein, d.h. 80% in der ersten Behandlungszone (Vorwaschen) und 20% in der zweiten Behandlungszone (Nachspülen). Die Sprühdüsen könnten aber auch im Verhältnis von 90% zu 10% oder 70% zu 30% zwischen der ersten und der zweiten Behandlungszone aufgeteilt sein oder jede andere denkbare sinnvolle Aufteilung haben. Die zweite Behandlungszone (Nachspülen) wird dabei vorzugsweise immer mit Frischwasser versorgt. Alternativ ist auch möglich, auch die Düsen der zweiten Behandlungszone (Nachspülen) mit aufbereitetem Reinwasser aus dem Reinwassertank zu versorgen.

Vorzugsweise ist die Transporteinrichtung zum Transport der Behälter entlang der Behandlungsstrecke unter einem Winkel gegenüber der Horizontalen angestellt und die Behandlungsstrecke verläuft von einem geodätisch höheren Niveau zu einem geodätisch tieferen Niveau.

Das bedeutet, dass es sich bei der Vorrichtung vorzugsweise um einen Schwerkraft-Wasser-Rinser handelt, bei dem die Behälter aufgrund der Schwerkraft entlang einer schiefen Ebene in Transportrichtung transportiert werden.

Besonders vorteilhaft bei dem Verfahren zur Reinigung von Behältern, insbesondere Dosen in einer Getränkeabfüllanlage, mit einer Transporteinrichtung zum Transport der Behälter entlang einer Behandlungsstrecke, in welcher die Behälter mit einer Öffnung nach unten weisend transportiert werden, wobei die Behandlungsstrecke zumindest eine erste Behandlungszone mit einer Anordnung einer Mehrzahl von auf die Öffnung der Behälter gerichteten Düsen zur Einspritzung von Wasser in die Behälter aufweist, ist es, dass das aus den Behältern austretende Brauchwasser mittels eines Wassersammlers aufgefangen und zumindest einem Brauchwassertank zur Aufnahme des Brauchwassers aus dem Wassersammler zugeführt wird, wobei das Brauchwasser mittels zumindest eines Filtrationsmoduls, insbesondere eines Ultrafiltrationsmoduls, aufbereitet und in einer Kreislaufwasserführung den Düsen der ersten Behandlungszone zugeführt wird.

Durch die Kreislaufwasserführung wird wie zuvor erläutert der Frischwasserverbrauch bei der Anwendung des Verfahrens gegenüber dem Stand der Technik deutlich verringert.

Vorzugsweise weist die Behandlungsstrecke in Transportrichtung der Behälter auf die erste Behandlungszone folgend eine zweite Behandlungszone mit einer Anordnung einer Mehrzahl von auf die Öffnung der Behälter gerichteten Düsen zur Einspritzung von Wasser in die Behälter auf, wobei die Düsen der zweiten Behandlungszone mit Frischwasser gespeist werden.

Durch die Speisung der Düsen der zweiten Behandlungszone mit Frischwasser wird somit trotz der Verschleppung eines kleinen Anteils von Restwasser in den Dosen stets mehr Brauchwasser pro Zeiteinheit mittels des Wassersammlers aufgefangen, als in derselben Zeiteinheit in der ersten Behandlungszone verbraucht wird. Dadurch bedarf es während des Betriebs keiner zusätzlichen Frischwasserzufuhr zur Versorgung der ersten Behandlungszone mit Reinwasser.

Vorzugsweise sind mehrere Filtrationsmodule parallelgeschaltet und es wird zumindest ein Filtrationsmodul im Filterbetrieb von Brauchwasser durchströmt und zumindest ein anderes Filtrationsmodul gleichzeitig im Spülbetrieb regeneriert.

Durch eine solche redundante Ausgestaltung und parallele Anordnung mehrerer Filtrationsmodule ist ein kontinuierlicher Betrieb der Vorrichtung ermöglicht, d.h. es muss bei einer erforderlichen Regeneration eines Filtrationsmoduls keine Betriebsunterbrechung erfolgen.

Vorzugsweise erfolgt eine Überwachung des Reinwassermassenstromes an einem Austritt aus dem Filtrationsmodul, wobei bei Unterschreitung eines festlegbaren Grenzwertes für den Reinwassermassenstrom eine Regeneration des Filtrationsmoduls in Form einer Spülung des Filtrationsmoduls ausgelöst wird.

Bevorzugt wird nach Ablauf einer festlegbaren Zeitspanne für den Filterbetrieb eine Regeneration des Filtrationsmoduls in Form einer Spülung des Filtrationsmoduls ausgelöst.

Eine Regeneration des Filtrationsmoduls, d.h. eine Reinigung und Auswaschung des im Filtrationsbetrieb zurückbehaltenen Retentats kann insbesondere durch eine Vorwärtsspülung des Filtrationsmoduls mit Brauchwasser erfolgen.

Es kann somit alternativ oder kumulativ eine Regeneration eines Filtrationsmoduls bei Detektion einer Verblockung des Filtrationsmoduls ausgelöst werden, oder nach Ablauf einer festlegbaren Zeitspanne für den Filterbetrieb. Eine Verblockung des Filtrationsmoduls infolge einer Verschmutzung des Filtrationsmoduls zeigt sich durch eine Abnahme des Reinwassermassenstromes an einem Austritt aus dem Filtrationsmodul. Eine Regeneration des Filtrationsmoduls erfolgt durch eine Spülung des Filtrationsmoduls mit Brauchwasser, hierzu wird die Durchflussmenge erhöht. Das Retentat wird in einem Ausspültank gesammelt und über einen Ablauf aus dem Ausspültank abgeleitet.

Vorzugsweise wird in regelmäßigen Zeitabständen eine Überprüfung des/der Filtrationsmodul/e auf einen Membranbruch durchgeführt, indem das/die Filtrationsmodul/e von Wasser entleert und mit Druckluft beaufschlagt werden und ein Druckhaltetest durchgeführt wird.

Ein Ausführungsbeispiel der Erfindung wird nachfolgend anhand der Figur erläutert. Es zeigt:

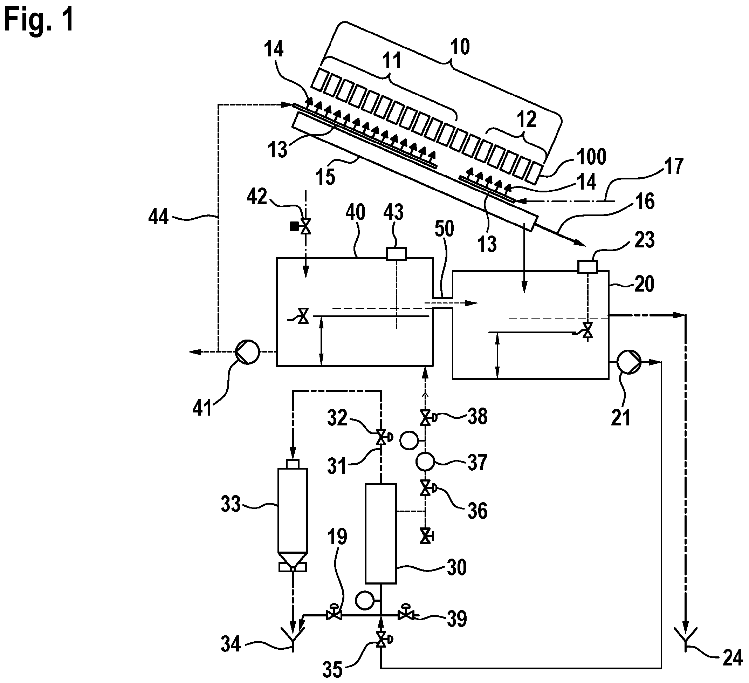

Fig. 1 Ein Anlagenschema eines Schwerkraft-Wasser-Rinsers mit einer Kreislaufwasserführung.

Figur 1 zeigt ein Anlagenschema einer erfindungsgemäßen Vorrichtung zur Reinigung von Behältern mit einer Kreislaufwasserführung. Bei dem dargestellten Ausführungsbeispiel handelt es sich um einen Schwerkraft-Wasser-Rinser. Jedoch ist die Erfindung nicht auf diesen Typ von Rinsern beschränkt.

Der Aufbau der Vorrichtung sowie das Verfahren zum Betrieb der Vorrichtung werden nachfolgend anhand der Figur 1 erläutert. Die angegebenen Zahlenwerte einzelner physikalischer Größen während des Betriebs der Vorrichtung sind lediglich beispielhaft, d.h. dass der Betrieb der Vorrichtung nicht hierauf beschränkt ist. Der Begriff der Ultrafiltration wird nachfolgend auch UF abgekürzt.

Figur 1 zeigt einen Wasser-Rinser mit Rinserkanal, in dem die unbefüllten Getränkedosen 100 durch die Schwerkraft vom Einlauf zum Auslauf entlang der Behandlungsstrecke 10 geführt werden. Wie in der Figur dargestellt verläuft der Rinserkanal, in dem die Dosen 100 geführt werden, von einem geodätisch höher gelegenen Niveau zu einem geodätisch tiefer gelegenen Niveau, sodass die Getränkedosen 100 durch die Schwerkraft gefördert werden.

Im Rinserkanal werden die nach unten offenen Dosen 100 über ein Sprührohr 13 mit Sprühdüsen 14 geführt und ausgespült. Der Wasserdruck an den Sprühdüsen 14 kann manuell geregelt werden. Das ablaufende Brauchwasser wird mittels eines Wassersammlers 15 aufgefangen und über ein Gefälle dem Brauchwassertank 20 zugeführt. Eine drehzahlgeregelte Brauchwasserpumpe 21 führt bedarfsweise das Brauchwasser einem UF-Filtermodul 30 zu. Das gewonnene Filtrat (Permeat) wird dem Reinwassertank 40 (Filtrattank) zugeführt. Die Durchflussmenge ist bevorzugt immer so eingestellt, dass mehr Reinwasser (Filtrat) erzeugt als über die erste Behandlungszone 11 oder ggf. andere Verwendungen verbraucht wird. Dadurch wird gewährleistet, dass immer ein Filtratüberlauf von Reinwassertank 40 (Sauber) über den Überlauf 50 zum Brauchwassertank 20 (Schmutz) stattfindet.

Ferner weist das UF-Filtermodul 30 einen Retentatauslass 31 auf, um bedarfsweise das UF-Filtermodul 30 auszuspülen und das Retentat abzuführen. Der Retentatauslass 31 ist im Betrieb mit einem Ausgangsventil 32 geschlossen und mündet in den Ausspültank 33, aus dem das Retentat über einen Ablauf 34 abgelassen werden kann.

Mit dem Wasser aus dem Reinwassertank 40 (Filtrattank) versorgt eine Reinwasserpumpe 41 die Sprühdüsen 14 in der ersten Behandlungszone 11 (Vorwaschzone) über eine Leitung 44. Die Förderung des Reinwassers aus dem Reinwassertank 40 über die Leitung 44 zu den Düsen 14 der ersten Behandlungszone 11 erfolgt mittels der Reinwasserpumpe 41.

Die Sprühdüsen 14 im Rinser sind dabei im dargestellten Beispiel im Verhältnis 80/20 aufgeteilt, 80% in der ersten Behandlungszone 11 (Vorwaschen) und 20% in der zweiten Behandlungszone 12 (Nachspülen). Die Sprühdüsen 14 könnten alternativ im Verhältnis auch 90%/10% aufgeteilt sein. Die Düsen 14 zweite Behandlungszone (Nachspülen) werden dabei immer mit Frischwasser über eine Frischwasserleitung 17 versorgt.

Durch die hohe Geschwindigkeit der Dosen 100 reicht die Verweildauer im Rinser nicht aus, dass die Dosen 100 nach dem Spülvorgang komplett trocken sind. Es bleibt immer eine kleine Restmenge Wasser in bzw. an den Dosen 100. Diese verschleppte Restmenge des über die Düsen 14 eingespritzten Wassers wird in der Regel durch das zulaufende Frischwasser aus der zweiten Behandlungszone 12 ausgeglichen. Sollte das Frischwasser aus der zweiten Behandlungszone 12 nicht ausreichen, um die verschleppte Menge auszugleichen, wird über ein Ventil 42 zusätzlich Frischwasser in den Reinwassertank 40 (Filtrattank) nachdosiert. Das Niveau in den Tanks 20, 40 wird durch die Sensoren 23, 43 überwacht. Ist die zugeführte Frischwassermenge aus der zweiten Behandlungszone 12 größer als die verschleppte Menge, wird diese Menge über den Überlauf 24 im Brauchwassertank 20 abgeführt. Die durch die Dosen 100 verschleppte und aus dem Kreislauf ausgetragenen Menge des Wassers beträgt erfahrungsgemäß ca. 1-2ml je Dose 100 und ist durch den Pfeil 16 angedeutet.

Überschüssiges Wasser kann auch anderweitig z.B. für eine Dosendusche (Reinigung der Dose von außen nach dem Abfüllen) verwendet werden.

Die Vorrichtung weist somit eine Kreislaufwasserführung auf, indem das aus den gereinigten Dosen austretende Brauchwasser mittels des Wassersammlers 15 aufgefangen und dem Brauchwassertank 20 zugeführt wird. Das Brauchwasser aus dem Brauchwassertank 20 wird mittels der Brauchwasserpumpe 21 zum Filtrationsmodul 30 gefördert. Das Filtrationsmodul 30 weist am Eintritt ein Eingangsventil 35, am Filtratauslass eine Filtratventil 36 und am Retentatauslass 31 ein Ausgangsventil 32 auf. Der Retentatauslass 31 mündet in den Ausspültank 33, der einen Ablauf 34 zur Ableitung des Retentats aufweist.

Das Filtrat aus dem Filtrationsmodul 30 wird über eine Filtratleitung dem Reinwassertank 40 zugeführt. Die Filtratleitung weist einen Durchflussmesser 37 und ein Handventil 38 auf.

Aus dem Reinwassertank 40 wird das aufbereitete Reinwasser mittels der Pumpe 41 über die Leitung 44 über das Sprührohr 13 den Düsen 14 der ersten Behandlungszone 11 zugeführt und in die Dosen 100 eingespritzt.

Der Füllstand des Brauchwassertanks 20 wird mittels des Füllstandsensors 23 überwacht. Der Füllstand des Reinwassertanks 40 wird mittels des Füllstandsensors 43 überwacht. Bei zu hohem Füllstand im Reinwassertank 40 kann Reinwasser über den Überlauf 50 in den Brauchwassertank 20 abgeführt werden. Bei zu hohem Füllstand im Brauchwassertank 20 kann Brauchwasser über den Überlauf 24 abgeführt werden. Hierzu ist zwischen dem Reinwassertank 40 und dem Brauchwassertank 20 ein Überlauf 50 angeordnet.

Bei zu niedrigem Füllstand im Reinwassertank 40 kann über das Ventil 42 Frischwasser in den Reinwassertank 40 (Filtrattank) nachdosiert werden.

Im normalen Filterbetrieb pumpt die frequenzgeregelte Brauchwasserpumpe 21 Brauchwasser aus dem Brauchwassertank 20 über das geöffnete Eingangsventil 35 in das UF-Filtermodul 30. Das Brauchwasser durchströmt die Hohlfasern von außen nach innen, dabei werden vorhanden Partikel, Viren und Bakterien zurückgehalten und im Filtergehäuse gesammelt. Das saubere Filtrat (Permeat) fließt über das geöffnete Filtratventil 36, den Durchflussmesser 37 und ein manuell einstellbares Hand-Ventil 38 in den Reinwassertank 40 (Filtrattank). Der Filtratfluss, der Eingangsdruck und Ausgangsdruck werden von der Steuerung erfasst. Der Sollwert für den Filtratfluss wird digital an der Steuerung vorgegeben. Je nach Filterfläche des UF-Moduls 30 liegt der Filtratfluss in der Regel zwischen 30 - 50 Liter/min. Zu Beginn startet die Brauchwasserpumpe 21 mit einem vorgegebenen minimalen Wasserzulaufdruck von z.B. 0,8 bar. Der daraus resultierende Filtratfluss wird mit dem manuell einstellbaren 38 Handventil in der Filtratleitung auf einen Wert ca. 10% über dem in der Steuerung vorgegebenen Sollwert eingestellt.

Während des Filterbetriebs erhöht sich die Druckdifferenz (Transmembrandruck) über dem UF-Filter 30 durch die zurückgehaltenen Schmutzpartikel und der Filtratfluss sinkt. Bei Unterschreitung des in der Steuerung vorgegebenen Sollwerts für den Filtratfluss, wird eine Membranspülung ausgelöst. Dazu wird das Eingangsventil 35 und das Filtratventil 36 geschlossen, das Ausgangsventil 32 und das Luftventil 39 geöffnet. Durch die einströmende Luft in das Filtermodul 30 werden die Hohlfasern im Inneren des Filtergehäuses in Schwingung versetzt und die angesammelten Schmutzpartikel, Bakterien und Viren gelöst. Das Luftventil 39 wird nach einer einstellbaren Zeit von z.B. 15 sec. geschlossen. Nach dieser Luftreinigung wird das Eingangsventil 35 wieder geöffnet und die Drehzahl der geregelten Brauchwasserpumpe 21 für das Vorwärtsspülen des Filtratmoduls 30 erhöht. Die vorher gelösten Schmutzpartikel werden mit hohem Fluss über das Ausgangsventil 32 in den Ausspültank 33 gespült und langsam in den Abwasserkanal abgeleitet.

Nach einer einstellbaren Zeit von z.B. 30 sec wird die Drehzahl der Brauchwasserpumpe 21 wieder auf den niedrigeren Filtrierdruck reduziert, das Filtratventil 36 wieder geöffnet, das Ausgansventil 32 geschlossen und der Filterbetrieb beginnt von neuem.

Wenn bei geringer Verschmutzung des Brauchwassers der vorgegebene Sollwert für den Filtratfluss für lange Zeit nicht unterschritten wird, dann wird nach einer maximal vorgegebenen Zeit von z.B. 120 min eine Zwangsspülung des UF-Filtermoduls 30 ausgelöst. Ebenso, wenn bei hoher Verschmutzung des Brauchwassers der Sollwert für den Filtratfluss schon nach sehr kurzer Zeit unterschritten wird, wird nicht sofort, sondern erst nach einer minimal vorgegebenen Zeit von z.B. 20 min eine Membranspülung ausgelöst.

Die minimale Betriebsdauer sowie die maximale Betriebsdauer bis zur Auslösung einer Regeneration des UF-Filtermoduls 30 durch eine Spülung des UF-Filtermoduls 30 sind in der Steuerung vorgebbar.

Um die Beanspruchung der Filtermembran des UF-Filtermoduls 30 gering zu halten und eine möglichst lange Lebensdauer zu erreichen wird über eine automatische Druckanpassung versucht, den Wasserzulaufdruck zum UF-Filtermodul 30 möglichst niedrig zu halten. In Abhängigkeit der Verschmutzung und der sich daraus ergebenen Spülzykluszeiten der UF-Membrane des UF-Filtermoduls 30 wird die Drehzahl und damit der Druck der Brauchwasserpumpe 21 zwischen einem minimalen Wasserzulaufdruck von z.B. 0,8 bar und einem maximalen Wasserzulaufdruck von z.B. 2,0bar automatisch geregelt. Wenn sich bei geringer Verschmutzung die Spülzykluszeit in den Bereich der maximalen Spülzykluszeit bewegt und eine einstellbare Grenze überschreitet, wird der Sollwert für den Wasserzulaufdruck nach der nächsten Membranspülung um eine einstellbare Schrittweite z.B. 0,1 bar reduziert. Wenn sich bei hoher Verschmutzung die Spülzykluszeit in den Bereich der minimalen Spülzykluszeit bewegt und eine einstellbare Grenze unterschreitet, wird der Sollwert für den Wasserzulaufdruck nach der nächsten Membranspülung um eine einstellbare Schrittweite z.B. 0,1 bar erhöht. Durch diese vollautomatische Anpassung des Wasserzulaufdrucks wird die UF-Membrane des UF-Filtermoduls 30 stets mit der optimalen Spülzykluszeit und dem optimalen Wasserzulaufdruck betrieben, um den gewünschten Filtratfluss zu erreichen.

In einer nicht dargestellten Alternative der Vorrichtung sind zur Erhöhung des Filtratflusses mehrere Filtermodule 30 im Filterbetrieb parallelgeschaltet, sodass zumindest ein Filtermodul 30 im Filterbetrieb betrieben werden kann, während ein anderes Filtermodul 30 im Regenerationsbetrieb gespült wird. Die Spülung der einzelnen Membranen erfolgt dabei selektiv und nacheinander.

Um einen redundanten Betrieb zu gewährleisten, können ferner zwei oder mehrere Filtermodule 30 parallelgeschaltet werden. Die Filtermodule 30 können im Wechsel oder gleichzeitig mit geringerem Durchfluss betrieben werden.

Die Filtermodule 30 können auf Membranbruch überwacht werden. Dazu wird ein zusätzliches Ventil zum Entleeren der Filtermembrane in der Zulaufleitung installiert. In vorgegebenen Zeitabständen oder in Betriebspausen oder im redundanten Betrieb bei zwei oder mehr Filtermodulen 30 kann eine Membranüberprüfung durchgeführt werden.

Bei der Überprüfung wird das Eingangsventil 35 geschlossen. Das Ausgangsventil 32, das Filtratventil 36 und das zusätzliche Entleerventil 19 wird geöffnet und die Zulaufseite des Filtermoduls 30 entwässert. Nach einer Wartezeit von beispielsweise ca. 3 min werden das Ausgangsventil 32 und das Entleerventil geschlossen. Das Luftventil 39 wird so lange geöffnet bis ca. 1,0 bar Luftdruck auf der Zulaufseite der Filtermembrane des UF-Filtermoduls 30 anstehen. Nach einer Wartezeit von weiteren ca. 3 min wird der Druckhaltetest gestartet. Während des Druckhaltetestes muss das Filtratventil 36 geöffnet sein und der Luftdruckabfall auf der Zulaufseite darf innerhalb von 3 min nicht mehr als ca. 30 mbar betragen.

In einer weiteren nicht dargestellten Variante ist ferner eine sogenannte CIP-Reinigung in die Vorrichtung integriert, d.h. eine Anlage für eine automatische Reinigung der Vorrichtung ohne Demontage von Produktionsanlagen vor Ort.

Die Vorrichtung weist eine Steuereinheit auf. Mittels dieser Steuereinheit sind die Betriebsparameter festlegbar. Ferner erfolgt mittels der Steuereinheit die Überwachung der Sensordaten aus der Vorrichtung, sodass eine Steuerung der einzelnen Komponenten wie beispielsweise der Brauchwasserpumpe und der Reinwasserpumpe in Abhängigkeit der Betriebs- und Sensordaten in einem geschlossenen Regelkreis erfolgt.

## Patentansprüche

1. Vorrichtung zur Reinigung von Behältern (100), insbesondere Dosen in einer Getränkeabfüllanlage, mit einer Transporteinrichtung zum Transport der Behälter entlang einer Behandlungsstrecke (10), in welcher die Behälter (100) mit einer Öffnung nach unten weisend transportierbar sind, wobei die Behandlungsstrecke (10) zumindest eine erste Behandlungszone (11) mit einer Anordnung einer Mehrzahl von auf die Öffnung der Behälter (100) gerichteten Düsen (14) zur Einspritzung von Wasser in die Behälter (100) aufweist, **dadurch gekennzeichnet, dass** die Vorrichtung einen Wassersammler (15) zum Auffangen des aus den gereinigten Behältern (100) austretenden Brauchwassers aufweist und wobei die Vorrichtung zumindest einen Brauchwassertank (20) zur Aufnahme des Brauchwassers aus dem Wassersammler (15) aufweist, wobei die Vorrichtung zumindest ein Filtrationsmodul (30) aufweist welches dem Brauchwassertank (20) nachgeschaltet ist, wobei die Vorrichtung zumindest einen Reinwassertank (40) aufweist, welcher dem Filtrationsmodul (30) nachgeschaltet ist und zumindest eine Leitung (44) von dem Reinwassertank (40) zu einem die Düsen (14) der ersten Behandlungszone (11) speisenden Verteiler (13) angeordnet ist.

2. Vorrichtung nach Anspruch 1, **dadurch gekennzeichnet, dass** als Filtrationsmodul (30) ein oder mehrere Ultrafiltrationsmodule eingesetzt werden, insbesondere mit einem Filtrationsbereich von 0,01 µm bis 0,05 µm.

3. Vorrichtung nach Anspruch 1 oder 2, **dadurch gekennzeichnet, dass** eine einen Überlauf (50) vom Reinwassertank (40) zum Brauchwassertank (20) bildende Verbindungsleitung zwischen dem Reinwassertank (40) und dem Brauchwassertank (20) angeordnet ist.

4. Vorrichtung nach einem der vorherigen Ansprüche, **dadurch gekennzeichnet, dass** der Brauchwassertank (20) und/oder der Reinwassertank (40) jeweils zumindest einen Füllstandsensor (23, 43) aufweist/aufweisen.

5. Vorrichtung nach einem der vorherigen Ansprüche, **dadurch gekennzeichnet, dass** zumindest eine Brauchwasserpumpe (21) angeordnet ist, mittels derer Brauchwasser aus dem Brauchwassertank (20) zu zumindest einem Filtrationsmodul (30) gefördert wird.

6. Vorrichtung nach einem der vorherigen Ansprüche, **dadurch gekennzeichnet, dass** zumindest eine Reinwasserpumpe (41) angeordnet ist, mittels derer Reinwasser aus einem Reinwassertank (40) zu den Düsen (14) zumindest der ersten Behandlungszone (11) gefördert wird.

7. Vorrichtung nach einem der vorherigen Ansprüche, **dadurch gekennzeichnet, dass** mehrere Filtrationsmodule (30) parallelgeschaltet sind, sodass zumindest ein Filtrationsmodul (30) im Filterbetrieb von Brauchwasser durchströmbar ist und zumindest ein anderes Filtrationsmodul (30) gleichzeitig im Spülbetrieb regenerierbar ist.

8. Vorrichtung nach einem der vorherigen Ansprüche, **dadurch gekennzeichnet, dass** die Behandlungsstrecke (10) in Transportrichtung auf die erste Behandlungszone (11) folgend eine zweite Behandlungszone (12) mit einer Anordnung einer Mehrzahl von auf die Öffnung der Behälter (100) gerichteten Düsen (14) zur Einspritzung von Wasser in die Behälter aufweist.

9. Vorrichtung nach einem der vorherigen Ansprüche, **dadurch gekennzeichnet, dass** die Transporteinrichtung zum Transport der Behälter (100) entlang der Behandlungsstrecke (10) unter einem Winkel gegenüber der Horizontalen angestellt ist und die Behandlungsstrecke (10) von einem geodätisch höheren Niveau zu einem geodätisch tieferen Niveau verläuft.

10. Verfahren zur Reinigung von Behältern (100), insbesondere Dosen in einer Getränkeabfüllanlage, mit einer Transporteinrichtung zum Transport der Behälter (100) entlang einer Behandlungsstrecke (10), in welcher die Behälter (100) mit einer Öffnung nach unten weisend transportiert werden, wobei die Behandlungsstrecke (10) zumindest eine erste Behandlungszone (11) mit einer Anordnung einer Mehrzahl von auf die Öffnung der Behälter (100) gerichteten Düsen (14) zur Einspritzung von Wasser in die Behälter (100) aufweist, insbesondere zum Betrieb einer Vorrichtung nach einem der vorherigen Ansprüche, **dadurch gekennzeichnet, dass** das aus den Behältern (100) austretende Brauchwasser mittels eines Wassersammlers (15) aufgefangen und zumindest einem Brauchwassertank (20) zur Aufnahme des Brauchwassers aus dem Wassersammler (15) zugeführt wird, wobei das Brauchwasser mittels zumindest eines Filtrationsmoduls (30), insbesondere eines Ultrafiltrationsmoduls, aufbereitet und in einer Kreislaufwasserführung den Düsen (14) der ersten Behandlungszone (11) zugeführt wird.

11. Verfahren nach Anspruch 10, **dadurch gekennzeichnet, dass** die Behandlungsstrecke (10) in Transportrichtung der Behälter (100) auf die erste Behandlungszone (11) folgend eine zweite Behandlungszone (12) mit einer Anordnung einer Mehrzahl von auf die Öffnung der Behälter (100) gerichteten Düsen (14) zur Einspritzung von Wasser in die Behälter aufweist, wobei die Düsen (14) der zweiten Behandlungszone (12) mit Frischwasser gespeist werden.

12. Verfahren nach Anspruch 10 oder 11, **dadurch gekennzeichnet, dass** mehrere Filtrationsmodule (30) parallelgeschaltet sind und zumindest ein Filtrationsmodul (30) im Filterbetrieb von Brauchwasser durchströmt und zumindest ein anderes Filtrationsmodul (30) gleichzeitig im Spülbetrieb regeneriert wird.

13. Verfahren nach einem der Ansprüche 10 bis 12, **dadurch gekennzeichnet, dass** eine Überwachung des Reinwassermassenstromes an einem Austritt aus dem Filtrationsmodul (30) erfolgt, wobei bei Unterschreitung eines festlegbaren Grenzwertes für den Reinwassermassenstrom eine Regeneration des Filtrationsmoduls (30) in Form einer Spülung des Filtrationsmoduls (30) ausgelöst wird.

14. Verfahren nach einem der Ansprüche 10 bis 13, **dadurch gekennzeichnet, dass** nach Ablauf einer festlegbaren Zeitspanne für den Filterbetrieb eine Regeneration des Filtrationsmoduls (30) in Form einer Spülung des Filtrationsmoduls (30) ausgelöst wird.

15. Verfahren nach einem der Ansprüche 10 bis 14, **dadurch gekennzeichnet, dass** in regelmäßigen Zeitabständen eine Überprüfung des/der Filtrationsmodul/e (30) auf einen Membranbruch durchgeführt wird, indem das/die Filtrationsmodul/e (30) von Wasser entleert und mit Druckluft beaufschlagt werden und ein Druckhaltetest durchgeführt wird.
